# EUROPÄISCHE PATENTANMELDUNG

(11) **EP 2 033 913 A2**
(43) Veröffentlichungstag der Anmeldung: **11.03.2009**
(21) Anmeldenummer: 08163073.3
(22) Anmeldetag: 27.08.2008
(51) Int. Cl.: B65G 47/14

(54) **Vorrichtung zum Vereinzeln von einfachen und komplexen Teilen**

(30) Priorität: 10.09.2007 DE 102007000719
(71) Anmelder: FMS Systemtechnik GmbH, 84559 Kraiburg (DE)
(72) Erfinder: Seidl, Gerhard, 82178 Puchheim (DE); Kopp, Harald, 82178 Puchheim (DE); Christoph, Gerhard, 82178 Puchheim (DE)
(74) Vertreter: TBK-Patent

(57) **Zusammenfassung**

Offenbart wird eine Vereinzelungsvorrichtung (1) für Kleinteile (5), die eine Hebeeinrichtung (2) innerhalb eines Behälters (3) aufweist, der zur Aufnahme von Kleinteilen (5) vorgesehen ist, wobei die Hebeeinrichtung (2) einen bewegbaren Stempel (4) aufweist, der eine erste Bewegung ausführen kann, die von einem Bodenbereich des Behälters (3) aus aufwärts gerichtet ist, um eine Anzahl von Kleinteilen (5) aufzunehmen, und des Weiteren zumindest ein zweites Bewegungsprofil ausführen kann, um die Anzahl von Kleinteilen (5) auf diesem zu verringern.

## Beschreibung

Die Erfindung bezieht sich auf eine Vorrichtung zum Vereinzeln bzw. Separieren von Teilen. Eine derartige Vereinzelung kann im Zuge eines komplexen Herstellungsprozesses notwendig sein und wird mittels eines entsprechenden Topfförderers erreicht.

### Stand der Technik

Bei unterschiedlichsten Produktionsabläufen müssen Teile verwendet bzw. montiert werden. Diese müssen in geeigneter Art und Weise zugeführt werden. Meist werden diese Teile, bspw. Federn, Schrauben, Bolzen, Muttern, Beilagscheiben und dergleichen, in einer ungeordneten Art angeliefert. Um für einen vordefinierten Produktionsprozess angemessen vorzuliegen, wird meist eine vorangehende Separierung und Sortierung vorgenommen. Diese Sortierung hat zur Folge, dass die Teile in eine Arbeitstellung gebracht werden, die wiederum einen einfachen Bewegungsablauf eines Aufnahmeroboters gewährleistet. Eine entsprechende Vorrichtung wird beispielsweise in DD 40 821 beschrieben. Nach einem Aufnehmen eines Bauteils kann es beispielsweise maschinell montiert werden.

In Dokument DE U1 8514938 ist eine Vorrichtung offenbart, die mit Hilfe einer Hubvorrichtung Teile aus einem Behälter entnimmt. Die magnetischen Teile werden aufgrund einer magnetischen Anziehungskraft, die von einem Magneten an einem Aufnahmeteller ausgeht, an diesen Magneten angezogen.

Die Teile können somit angehoben werden und der Aufnahmeteller kann gedreht werden, damit die Teile auf dem Aufnahmeteller liegend vorgesehen sind. Allerdings kann diese Vorrichtung nur zur Aufnahme von ferromagnetischen Teilen eingesetzt werden.

Mit einer fortschreitenden Entwicklung in der Robotik und Sensortechnik in Zusammenhang mit einer wünschenswerten Raum sparenden Geräteanordnung in einer Produktionsanlage ergibt sich folgende Entwicklung. Ein ausgedehnter Einsatz von moderner Sensorentechnik verringert die notwendigen Arbeitsschritte. Ein Arbeitsschritt, der dadurch wegfallen kann, ist das Sortieren der Teile bzw. das in eine Arbeitsstellung Bringen derselben. Bislang wurde häufig ein mechanisches Sortieren eingesetzt. Auch Verfahren, die magnetische Eigenschaften der Kleinteile nutzen, finden eine Anwendung. Da moderne Roboter mit solchen, vorangehend erwähnten Sensoren versehen werden können, erhalten diese auch die Möglichkeit nicht nur vordefinierte Bewegungsabfolgen auszuführen, sondern fallabhängig zu entscheiden und zu reagieren. Das heißt, sie erkennen die jeweilige Kontur und Lage des Bauteils, das in einem Sensorenfeld liegt, und passen die zum Greifen notwendige Bewegung an diese spezifische Lage an.

### Aufgabenstellung

Die Aufgabe der vorliegenden Erfindung ist es, eine Vorrichtung vorzusehen, die Kleinteile unabhängig von ihrer Beschaffenheit vereinzeln bzw. separieren kann.

Diese Aufgabe wird mit einer Vorrichtung gelöst, die die Merkmale gemäß des Anspruchs 1 aufweist. Durch die Vereinzelung wird ein Zustand geschaffen, der es einer modernen Automatisierungstechnik anschließend erlaubt, eine Kontur bzw. Form eines Bauteils zu erfassen und das Bauteil selbst zu greifen. Vorteilhafte Ausgestaltungen und Weiterbildungen sind Gegenstand der abhängigen Ansprüche.

Die Vorrichtung gemäß der Erfindung weist einen Behälter auf, in dem eine Anzahl von Teilen aufgenommen werden kann. Eine Hebeeinrichtung weist einen bewegbaren Stempel auf, der fähig ist, ein variables Bewegungsprofil auszuführen. Die erste Bewegung ist von einem Bodenbereich des Behälters aus aufwärts gerichtet. Mit dieser Bewegung kann der Stempel eine Anzahl von Kleinteilen aus dem Behälter aufnehmen. Die folgenden Bewegungen dienen dazu, die Anzahl der Kleinteile zu verringern und grob zu ordnen.

Die Kleinteile sind in einer wahllosen, beliebigen Anordnung in diesem Behälter vorhanden. Abhängig von der Geometrie und Beschaffenheit der Querschnittsfläche des Stempels der Hebeeinrichtung kann eine Anzahl von Kleinteilen aus dieser wahllosen, beliebigen Anordnung getrennt werden. Um eine Anzahl von Teilen von der Gesamtheit der Teile zu separieren, ist es vorteilhaft, wenn die Querschnittsfläche des Stempels größer als die Abmessungen der aufzunehmenden Teile ist. Die zu erzielende Wirkung der Vorrichtung ist unabhängig von der Querschnittsform des Stempels. Dieser kann eine runde oder polygone Form haben.

Um selbst bei einer geringen Anzahl von Teilen in dem Behälter an sich ein Funktionieren der Vorrichtung zu gewährleisten, ist es wünschenswert, dass die Bodenfläche des Behälters in einem Winkel zu der Horizontalen geneigt ist. Wenn entsprechend die Bodenfläche derart geneigt ist, dass deren Höhe mit zunehmendem Abstand von dem Stempel der Hebeeinrichtung ansteigt, können sich selbst wenige in dem Behälter verbleibende Kleinteile auf den Stempel zu bewegen. Beliebige Formen der Bodenfläche sind möglich, wie zum Beispiel kugelförmig, konisch oder schräg.

Die vorangehend erwähnte erste Bewegung ist aufwärts gerichtet. Eine mögliche Ausgangsposition für diese Bewegung muss sich unterhalb der Schüttoberfläche der Kleinteile erstrecken. Diese Schüttoberfläche entspricht der Füllhöhe von Kleinteilen in dem Behälter. Um sämtliche Kleinteile aus dem Behälter entnehmen zu können, muss die Oberseite des Stempels in ihrer Ausgangsposition mindestens auf der Höhe der Bodenfläche sein oder darunter liegen. Es besteht eine Abhängigkeit zwischen einer erzielbaren Anzahl von Kleinteilen, die auf der Stempeloberfläche durch eine erste Bewegung aufgenommen werden kann, und dem Höhenunterschied zwischen der Schüttoberfläche und der tiefsten Position des Stempels vor einer ersten Bewegung. Je höher diese Eintauchtiefe in die Kleinteilmenge in dem Behälter ist, desto mehr Kleinteile können auf der Stempelfläche zum Liegen kommen. Die Hebeeinrichtung ist vorteilhaft an dem Boden des Behälters vorgesehen und weist einen säulenartigen Stempel auf. Die Querschnittsform des Stempels kann zu einer Öffnung in der Bodenfläche des Behälters korrespondieren. Ein Formschluss zwischen Stempel und Behälter kann aber auch durch eine Dichtung oder ähnlichem erreicht werden.

Nachdem durch die erste Bewegung eine Anzahl von Teilen von der Gesamtheit der Teile in dem Behälter getrennt wurde, befindet sich diese Anzahl von Teilen auf der Oberseite des Stempels. Die konkrete Anzahl der aufgenommenen Teile richtet sich nach der Größe und Form der Stempelfläche, aber auch nach der jeweiligen Form der Kleinteile, die eine mögliche Schütthöhe von diesen auf der Stempelfläche bestimmt. Diese Teile sind ebenfalls noch in einer beliebigen, wirren Anordnung vorhanden, bei welcher deren Form bzw. Kontur nicht einwandfrei ersichtlich ist.

Durch eine Verringerung der Teileanzahl auf der Stempelfläche bleiben nur wenige Teile zurück, die sodann eine ausreichende Fläche zur Verfügung haben, um vereinzelt zu liegen. Vorteilhafterweise liegen diese vereinzelten Kleinteile in einem Abstand zueinander, wodurch deren äußere Form von einer Sensoreinrichtung klar zu erkennen ist.

Diese notwendige Verringerung bzw. Vereinzelung wird durch eine zweite Bewegung erreicht. Diese zweite Bewegung kann viele verschiedene Arten und Formen aufweisen. Sie kann in vertikaler, horizontaler oder rotatorischer Richtung stattfinden oder aber auch in Kombination von diesen. Sie kann gleichförmig, regelmäßig oder gedämpft sein. Des Weiteren kann sie mit variablen Amplituden und/oder variablen Frequenzen ausgeführt werden. Möglich ist eine Bewegung in Kreisform oder ein Hin- und Herschwingen. Vorteilhaft kann auch eine ruckartige Änderung der Bewegungsrichtung, eine Änderung der Bewegungsgeschwindigkeit oder ein temporäres Stoppen der Bewegung sein. Um eine angemessene Verringerung der Teileanzahl zu erreichen, muss auch die Form und Größe der Kleinteile als auch der Stempelfläche in Erwägung gezogen werden.

Nachdem diese zweite Bewegung mindestens einmal ausgeführt wurde, stoppt die Hebeeinrichtung bzw. Stempel in einer vordefinierten, bevorzugten Position. Der Stempel hält in einer bestimmten Position an und mindestens ein Teil liegt auf der Stempelfläche. Eine Vorrichtung gemäß dieser Erfindung kann als eine von mehreren unterschiedlichen Vorrichtungen in einer Prozesskette verwendet werden.

Vorzugsweise weisen dann der Stempel und die Kleinteile unterschiedliche Farben auf. Zur Verbesserung des Kontrastverhältnisses kann der Stempel aus transparentem oder farbigem Material hergestellt werden. Durch direktes oder indirektes Beleuchten des Stempels lässt sich dieser Effekt zusätzlich optimieren. Ein möglichst großer Kontrastunterschied zwischen diesen erleichtert einer Erfassungsvorrichtung, wie zum Beispiel Sensoren, ein Erfassen der Form bzw. des Umrisses der Kleinteile. Dadurch kann eine Erfassungseinrichtung in der Lage sein, eines der Kleinteile zu erfassen, bzw. eine Greifeinrichtung in der Lage sein, eines der Kleinteile zu greifen.

Falls eine Erfassung durch eine Sensoreinrichtung nicht möglich ist, da zum Beispiel zu viele oder zu wenige Kleinteile auf der Stempelfläche vorhanden sind, kann ein Steuergerät eine Wiederholung des Vorgangs veranlassen. Die Wiederholung kann sich auf eine zweite Bewegung oder eine erste und zweite Bewegung beziehen.

Darüber hinaus ist es möglich, dass das Steuergerät lernfähig ist und die Art der Kleinteile erkennt. Wenn das Steuergerät lernfähig ist, kann es die ersten und zweiten Bewegungen optimieren und somit eine Ablaufdauer verringern. Eine Optimierung kann durch eine Variierung der Bewegungen als ein empirisches Verfahren erfolgen. Hat das Steuergerät eine Speichereinrichtung, kann es zum Beispiel Kombinationen von geeigneten Bewegungen und zugehörigen Kleinteilen abspeichern.

### Kurzbeschreibung der Zeichnungen

Fig. 1 ist eine schematische Schnittansicht, die eine Vereinzelüngsvorrichtung gemäß der Erfindung zeigt, bevor eine Hebeeinrichtung eine erste Bewegung ausführt.
Fig. 2 ist eine schematische Schnittansicht, die eine Vereinzelungsvorrichtung gemäß der Erfindung zeigt, nachdem die Hebeeinrichtung eine erste Bewegung ausgeführt hat.
Fig. 3 ist eine perspektivische Ansicht, die den Stempel der Hebeeinrichtung nach einer ersten Bewegung zeigt.
Fig. 4 ist eine perspektivische Ansicht, die den Stempel der Hebeeinrichtung nach einer zweiten Bewegung zeigt.

### Ausführungsbeispiel

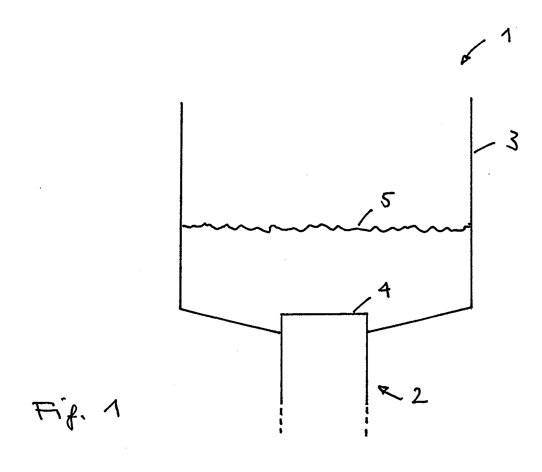

In Fig. 1 bis 4 ist eine bevorzugte Ausführungsform dargelegt. Fig. 1 zeigt eine Vereinzelungsvorrichtung 1 gemäß der vorliegenden Erfindung in ihrer Ausgangsposition, bevor der Stempel 4 der Hebeeinrichtung 2 eine erste Bewegung ausführt. In einem Behälter 3 ist eine Anzahl von Kleinteilen 5 in einer beliebigen, wirren Anordnung vorgesehen. Eine Hebeeinrichtung 2 hat einen bewegbaren Stempel 4 und ist in einer zentralen Position innerhalb des Behälters 3 angeordnet. Der Stempel 4 in dieser Ausführungsform hat einen runden Querschnitt.

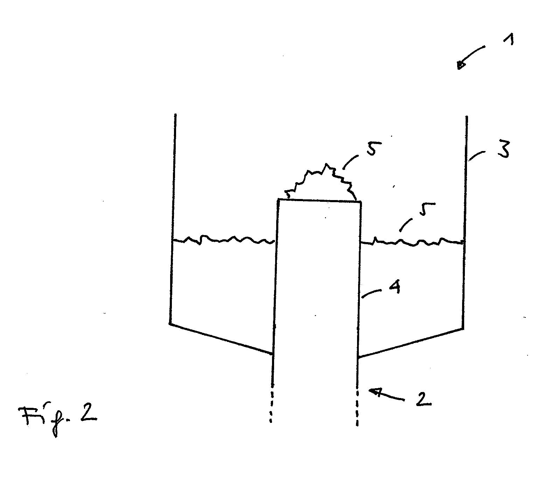

Fig. 2 zeigt vorangehend beschriebene Vorrichtung nach einem Ausführen der ersten Bewegung. Die Stempelfläche des Stempels 4 der Hebeeinrichtung 2 liegt nach der ersten Bewegung höher als die Oberfläche der geschütteten Kleinteile 5 in dem Behälter 3. Des Weiteren befindet sich auf der Stempelfläche eine Anzahl von Kleinteilen 5, die beliebig übereinander angeordnet sind.

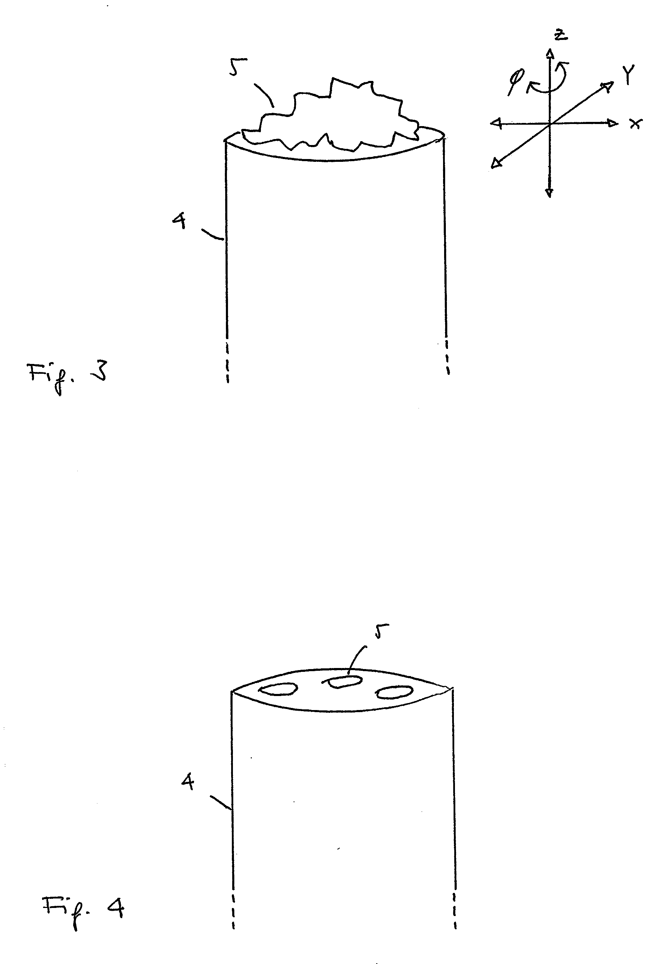

Fig. 3 ist eine perspektivische Ansicht des Stempels 4 in dem gleichen Zustand, der in Fig. 2 gezeigt ist. Der abgebildete Zustand liegt zwischen der ersten Bewegung und der zweiten Bewegung. Ebenfalls zu sehen sind die Drehrichtung ϕ sowie die Koordinatenrichtungen x, y, z. Die erste Bewegung, die zur Aufnahme der Kleinteile dient, findet in der Koordinatenrichtung z statt. Die darauf folgende zweite Bewegung kann in einer von diesen Richtungen x, y, z oder ϕ stattfinden oder aber in einer Kombination aus diesen. In dieser bevorzugten Ausführungsform ist die zweite Bewegung eine hin- und hergehende Bewegung ebenfalls in der z-Richtung. Nach mindestens einer zweiten Bewegung ist die Anzahl der auf der Stempelfläche liegenden Teile 5 derart verringert, dass deren Kontur ohne eine gegenseitige Behinderung oder Verdeckung zu erkennen ist, was in Fig. 4 gezeigt ist. Offenbart wird eine Vereinzelungsvorrichtung (1) für Kleinteile (5), die eine Hebeeinrichtung (2) innerhalb eines Behälters (3) aufweist, der zur Aufnahme von Kleinteilen (5) vorgesehen ist, wobei die Hebeeinrichtung (2) einen bewegbaren Stempel (4) aufweist, der eine erste Bewegung ausführen kann, die von einem Bodenbereich des Behälters (3) aus aufwärts gerichtet ist, um eine Anzahl von Kleinteilen (5) aufzunehmen, und des Weiteren zumindest ein zweites Bewegungsprofil ausführen kann, um die Anzahl von Kleinteilen (5) auf diesem zu verringern.

## Patentansprüche

1. Vereinzelungsvorrichtung (1) für Kleinteile (5), die eine Hebeeinrichtung (2) innerhalb eines Behälters (3) aufweist, der zur Aufnahme von Kleinteilen (5) vorgesehen ist,
**dadurch gekennzeichnet, dass**
die Hebeeinrichtung (2) einen bewegbaren Stempel (4) aufweist, der eine erste Bewegung ausführen kann, die von einem Bodenbereich des Behälters (3) aus aufwärts gerichtet ist, um eine Anzahl von Kleinteilen (5) aufzunehmen, und
des Weiteren zumindest ein zweites Bewegungsprofil ausführen kann, um die Anzahl von Kleinteilen (5) auf diesem zu verringern.

2. Vereinzelungsvorrichtung nach Anspruch 1,
**dadurch gekennzeichnet, dass**
eine Bodenfläche des Behälters (3) in einem Winkel zur Horizontalen vorgesehen ist.

3. Vereinzelungsvorrichtung nach Anspruch 1 oder 2,
**dadurch gekennzeichnet, dass**
die Hebeeinrichtung (2) an der Bodenfläche des Behälters (3) vorgesehen ist.

4. Vereinzelungsvorrichtung nach einem der vorangehenden Ansprüche,
**dadurch gekennzeichnet, dass**
die Hebeeinrichtung (2) in einer Öffnung in der Bodenfläche des Behälters (3) vorgesehen ist, wobei die Öffnung zu der Querschnittsform der Hebeeinrichtung (2) korrespondiert.

5. Vereinzelungsvorrichtung nach einem der Ansprüche 1 bis 4,
**dadurch gekennzeichnet, dass**
die zweite Bewegung in einer vertikalen, horizontalen oder rotatorischen Richtung bzw. deren Kombination ausgeführt wird.

6. Vereinzelungsvorrichtung nach einem der Ansprüche 1 bis 4,
**dadurch gekennzeichnet, dass**
die zweite Bewegung in einer vertikalen und horizontalen Richtung ausgeführt wird und bevorzugt einer Kreisbahn oder Ellipsenbahn folgt.

7. Vereinzelungsvorrichtung nach einem der vorangehenden Ansprüche,
**dadurch gekennzeichnet, dass**
die zweite Bewegung ruckartig eine Bewegungsrichtung wechselt.

8. Vereinzelungsvorrichtung nach einem der vorangehenden Ansprüche,
**dadurch gekennzeichnet, dass**
die zweite Bewegung eine gleich bleibende oder abnehmende Amplitude hat.

9. Vereinzelungsvorrichtung nach einem der vorangehenden Ansprüche,
**dadurch gekennzeichnet, dass**
die zweite Bewegung nach mindestens einer Richtungsänderung endgültig stoppt oder anhält und nach dem Anhalten wieder aufgenommen wird.

10. Vereinzelungsvorrichtung nach einem der vorangehenden Ansprüche,
**dadurch gekennzeichnet, dass**
die Querschnittsfläche des Stempels (4) der Hebeeinrichtung (2) größer ist als die größte Abmessung der Kleinteile (5).

11. Vereinzelungsvorrichtung nach einem der vorangehenden Ansprüche,
**dadurch gekennzeichnet, dass**
der Stempel (4) der Hebeeinrichtung (2) transparent oder in einer Farbe ausgeführt ist, die einen hohen Kontrast zu den Teilen (5) aufweist.

12. Vereinzelungsvorrichtung nach einem der vorangehenden Ansprüche,
**dadurch gekennzeichnet, dass**
die vereinzelten Teile (5) durch eine Erfassungseinrichtung erkannt werden.

13. Vereinzelungsvorrichtung nach einem der vorangehenden Ansprüche,
**dadurch gekennzeichnet, dass**
eine Erfassungsvorrichtung fähig ist, nach mindestens einer zweiten Bewegung des Stempels (4) der Hebeeinrichtung (2) ein Teil (5) auf diesem zu erfassen.

14. Vereinzelungsvorrichtung nach einem der vorangehenden Ansprüche,
**dadurch gekennzeichnet, dass**
eine Greifvorrichtung fähig ist, nach mindestens einer zweiten Bewegung des Stempels (4) der Hebeeinrichtung (2) ein Kleinteil (5) von diesem aufzunehmen.

15. Vereinzelungsvorrichtung nach einem der vorangehenden Ansprüche,
**dadurch gekennzeichnet, dass**
ein Steuergerät den Betrieb der Vorrichtung, der Erfassungsvorrichtung und/oder der Greifvorrichtung steuert.

16. Vereinzelungsvorrichtung nach einem der vorangehenden Ansprüche,
**dadurch gekennzeichnet, dass**
das Steuergerät eine Speichereinrichtung aufweist.
